# FASCICULE DE BREVET EUROPEEN

(11) **EP 1 357 014 B1**
(45) Date de publication et mention de la délivrance du brevet: **10.12.2008**
(21) Numéro de dépôt: 03291005.1
(22) Date de dépôt: 24.04.2003
(51) Int. Cl.: B62D 7/22

(54) **Dispositif de compensation de direction d'un véhicule automobile**
Lenkungkompensationseinrichtung eines Kraftfahrzeugs
Steering compensation device of a motor vehicle

(30) Priorité: 26.04.2002 FR 0205266
(43) Date de publication de la demande: 29.10.2003
(73) Titulaire: RENAULT S.A.S., 92100 Boulogne Billancourt (FR)
(72) Inventeur: Rollet, Rémi, 91190 Gif (FR); Thoraval, Richard, 95240 Cormeilles en Parisis (FR)

(56) Documents cités:
- EP-A- 0 659 630
- US-A- 4 697 817

## Description

La présente invention concerne un demi-train de suspension de véhicule automobile, muni d'un dispositif de compensation du tirage.

Elle s'adresse plus particulièrement au dispositif de compensation de direction d'un véhicule automobile, dont le support de roue, lié à un bras de suspension inférieur articulé sur un châssis et à une biellette de direction, est soumis à un premier effort de rotation engendré par le profil bombé des routes.

En effet, lorsque le conducteur d'un véhicule n'exerce aucune action sur le volant, le véhicule a tendance à ne pas adopter une trajectoire rectiligne. En effet, le véhicule subit des perturbations extérieures comme le vent ou les irrégularités de la route. Par ailleurs, en l'absence de perturbations extérieures, les véhicules ont tendance à dévier de leur trajectoire soit vers la droite, soit vers la gauche : le véhicule tire à droite ou à gauche. La cause principale en est que les routes possèdent un profil bombé de façon par exemple à évacuer l'eau de pluie. Dans les pays ou les véhicules roulent à droite de la chaussée, les véhicules ont tendance à dévier de leur trajectoire vers la droite.

Le tirage du au profil de la route est permanent. Pour conserver une trajectoire rectiligne, le conducteur doit appliquer un couple opposé permanent sur le volant. Ce couple peut être important, il contribue à la fatigue du conducteur sur les longs trajets. Il apparaît avantageux de disposer d'un moyen pour compenser ce tirage permanent. Néanmoins, le système de direction d'un véhicule automobile doit permettre au conducteur de détecter les informations qui remontent du contact entre les pneus et la route. Le conducteur peut ainsi détecter une faible adhérence ou un pneu crevé qui provoquera également un tirage important. Le dispositif de compensation du tirage ne doit pas altérer ni les informations retournées au conducteur, ni le fonctionnement normal de l'assistance de direction.

Un exemple de réalisation d'un dispositif de compensation est divulgué dans le document US 4 697 817 qui montre un support de roue lié à une biellette de direction et soumis à un effort de rotation engendré par la chaussée, des moyens élastiques de rappel étant fixés sur le support de roue.

Alternativement, un dispositif de compensation peut par exemple être implanté au niveau d'une jambe de force, constituée de façon connue par, entre autres, une tige d'amortisseur, autour duquel est placé un ressort, en appui sur une coupelle inférieure. La compensation du tirage s'effectue par la modification de l'orientation de cette coupelle inférieure. L'écart alors crée entre l'axe d'appui du ressort sur la coupelle inférieure et l'axe de la tige d'amortisseur écarte alors l'axe de la poussée du ressort de l'axe de pivot de l'ensemble de la jambe de force et génère donc un couple autour de cet axe pouvant être utilisé pour compenser une tendance du véhicule à dévier d'une trajectoire rectiligne.

Ce dispositif présente une configuration lourde, peu évidente à mettre en place et à modifier, ce qui peut poser des problèmes à la fois pour le domaine de l'après-vente et pour l'adaptation de ce système à différents types de tirage, par exemple la transposition d'un système étudié pour une conduite dans les pays où les véhicules roulent à droite de la chaussée, à une conduite dans les pays où les véhicules roulent à gauche de la chaussée. De plus, ces dispositifs ne s'appliquent pas à l'ensemble des blocs filtrants utilisés entre le ressort de suspension et la coupelle inférieure pour améliorer le confort acoustique. Ils ne peuvent ainsi pas être installés sur tous les types de véhicule.

Pour remédier à ces inconvénients, l'invention propose un demi train de suspension tel que défini dans la revendication 1, dans lequel des moyens élastiques de rappel sont fixés sur le support de roue. Un premier effort de rotation engendré par une déformation de la chaussée entraîne le déplacement des points de fixation de ces moyens élastiques, ce qui génère un deuxième effort de rotation, inverse au premier effort de rotation et propre à compenser ce phénomène de tirage.

Selon une caractéristique de la présente invention, les moyens élastiques de rappel sont situés dans un plan horizontal et l'axe passant par les points de fixation des moyens de rappel est orienté, au repos, parallèlement à l'axe de la liaison formée entre le bras inférieur de suspension et le châssis.

Selon l'esprit de l'invention, les moyens de rappel peuvent être intercalés entre le bras de suspension inférieur et le support de roue.

Afin de minimiser le moment induit par les moyens de rappel lors d'un braquage des roues, les points de fixation des moyens de rappel se rapprochent l'un de l'autre lors d'un braquage dans un sens déterminé, et, lors d'un braquage dans le sens opposé, les points de fixation des moyens de rappel s'éloignent l'un de l'autre, l'axe les reliant se rapprochant de l'axe de rotation du support de roue.

Selon les variantes de réalisation de l'invention, les moyens de rappel sont constitués d'un ressort « en C » précontraint, ou d'un ressort embobiné précontraint.

Afin de pouvoir adapter la compensation du véhicule à différents profils de route, la précontrainte des moyens de rappel peut être modifiée.

Selon une caractéristique de la présente invention, ce dispositif est complémentaire d'un deuxième dispositif de compensation.

Dans le but de proposer une configuration dont la mise en place, la modification après-vente et l'adaptation à différents types de tirage sont simplifiées, les moyens de rappel sont uniques et implantés sur un seul demi-train de suspension. Ces moyens de rappel peuvent alors être implantés sur l'un ou l'autre ce ces demi-train.

D'autres caractéristiques et avantages de l'invention apparaîtront à la lecture de la description détaillée qui suit pour la compréhension de laquelle on se reportera aux dessins annexés dans lesquels :
- la figure 1 est une vue, éclatée en perspective, de dessus, du dispositif de l'invention selon un premier mode de réalisation.

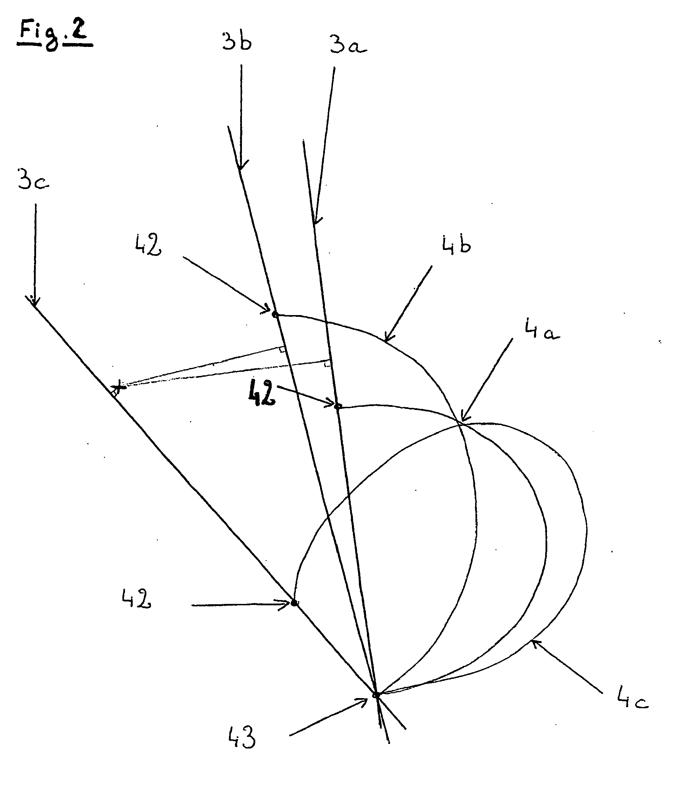

- la figure 2 est une représentation du positionnement des points de fixation des moyens de rappel selon l'invention

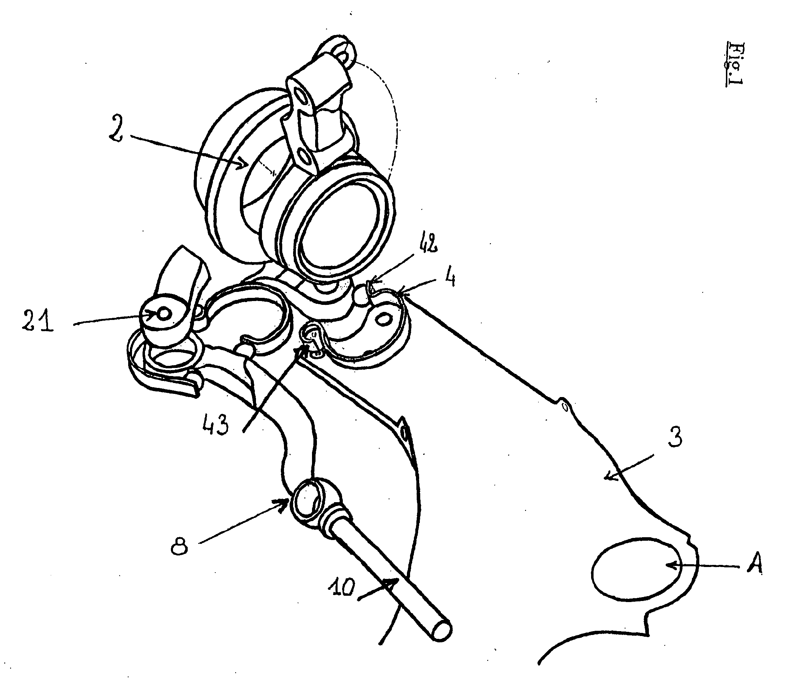

La figure 1 représente l'implantation d'un tel dispositif sur un demi-train de suspension gauche 1, cette implantation correspondant au traitement d'un tirage à droite, c'est à dire dans les pays où les véhicules roulent à droite de la chaussée. Cette moitié du train avant est constituée d'un support de roue 2 monté entre un bras de suspension inférieur 3 et un bras de suspension supérieur, non représenté. Ces deux bras sont respectivement articulés sur le châssis d'une manière connue. Le bras de suspension inférieur 3 est ainsi lié au châssis par deux points de liaison, formant une charnière dont l'axe est sensiblement parallèle à l'axe longitudinal du véhicule. Cette disposition n'est pas restrictive de l'invention et il sera compris que tout type de train de suspension peut être le support de l'innovation selon la présente invention.

Selon le mode de réalisation représenté à la figure 1, un ressort 4 est implanté entre le bras inférieur 3 et le support de roue 2. Ce ressort 4, précontraint, de forme « en C », dont une extrémité 43 est reliée au bras inférieur 3 et l'autre extrémité 42 est reliée au support de roue 2, est situé dans un plan horizontal et l'axe passant par les deux points de fixation du ressort 4 est sensiblement parallèle à l'axe de la charnière d'articulation du bras inférieur sur le châssis. Le tirage à droite de la route entraîne un déplacement du point de fixation 42 du ressort 4 au support de roue 2, qui se rapproche du second point de fixation 43 : le ressort 4 est alors compressé et ses propriétés fournies par la précontrainte tendent donc à créer un effort inverse propre à ramener le support de roue 2 à sa position originale.

Le positionnement des points de fixation 42, 43 du ressort 4 à l'origine est étudié pour répondre dans un premier temps au problème des sollicitations lors de débattements verticaux : le positionnement dans un plan horizontal et leur axe sensiblement parallèle à l'axe de la charnière d'articulation du bras inférieur 3 sur le châssis permet une absence d'effort subis lors d'un débattement vertical, ce qui augmente la durée de vie du ressort 4 et n'engendre pas ainsi de variation de distance entre ces points de fixation 42 et 43. D'autre part, leur espacement et le positionnement qui en découle par rapport à l'axe vertical de liaison du support de roue 2 permettent de minimiser le moment induit par ce ressort 4 précontraint lors d'un braquage des roues. Dans le cas 3a représenté à la figure 3, le ressort est positionné dans une situation de roulage rectiligne. Un braquage à gauche est représenté par le cas 3b, dans lequel le ressort se détend et renvoie donc un effort de plus en plus proche d'une valeur nulle. Le moment qui en découle se rapproche donc lui aussi d'une valeur nulle. Dans le cas opposé d'un braquage à droite, représenté par le cas 3c, le ressort se compresse et renvoie donc un effort de plus en plus important. Mais dans le même temps, le positionnement initial du ressort 4 fait tendre l'axe passant par les deux points de fixation 42, 43 du ressort 4 dans une direction telle que celui ci est proche de couper l'axe vertical de rotation du support de roue 2. Le moment qui en découle, produit de l'effort et de la distance par rapport à l'axe, tend donc également vers une valeur nulle. Le braquage des roues n'engendre ainsi pas de moment supplémentaire. De tels avantages peuvent également réalisable par l'intermédiaire d'un ressort embobiné. Le positionnement des points de fixation, à la fois au support de roue et au bras inférieur, doit alors connaître les mêmes précautions de mise en position que pour un ressort « en C ».

La présente invention permet d'adapter facilement le dispositif de compensation à un véhicule adapté à une conduite à gauche, en implantant celui-ci sur le demi-train droit. Cette implantation n'implique alors pas une modification des éléments constituant le dispositif selon la présente invention. Seule la disposition des points de fixation de part et d'autre du support de roue est à modifier. Cette installation aisée, son faible coût et le peu d'encombrement qui en résulte permettent d'envisager l'utilisation du dispositif selon l'invention en tant que dispositif de compensation unique ou combiné avec un autre dispositif ayant le même effet, comme des pneus ou des ressorts de suspension.

L'invention permet donc d'obtenir un dispositif de compensation du tirage simple, économique et qui peut s'adapter sur tout type de véhicule. Le dispositif de compensation provoque un effort qui s'oppose sensiblement à l'effort dû au tirage transmis par les roues. Ainsi, le dispositif de compensation du tirage selon l'invention ne perturbe pas le fonctionnement normal de l'ensemble de direction, sans filtrer notamment les informations perçues par le conducteur via la commande de direction.

L'invention n'est nullement limitée au mode de réalisation décrit et illustré qui n'a été donné qu'à titre d'exemple.

## Revendications

1. Demi-train de suspension (1) d'un véhicule automobile comportant un support de roue (2), lié à un bras de suspension inférieur (3) et à une biellette de direction (8), et soumis à un premier effort de rotation engendré par une déformation de la chaussée, des moyens élastiques de rappel (4) étant fixés sur le support de roue (2), le déplacement, lors du premier effort de rotation, des deux points de fixation (42 et 43) de ces moyens élastiques (4) générant un deuxième effort de rotation inverse au premier effort de rotation, l'axe passant par les deux points de fixation (42 et 43) des moyens de rappel (4) étant orienté, au repos, parallèlement à l'axe de la liaison entre le bras inférieur de suspension (3) et le châssis du véhicule.

2. Demi-train de suspension (1) selon la revendication 1, **caractérisé en ce que** les moyens élastiques de rappel (4, 5) sont situés dans un plan horizontal.

3. Demi-train de suspension (1) selon la revendication 1 ou 2, **caractérisé en ce que**, lors d'un braquage dans un sens déterminé, les points de fixation (42 et 43, 52 et 53) des moyens de rappel (4, 5) s'éloignent l'un de l'autre et, lors d'un braquage dans le sens opposé, les points de fixation (42 et 43, 52 et 53) des moyens de rappel (4, 5) se rapprochent l'un de l'autre, l'axe les reliant se rapprochant de l'axe de rotation du support de roue (2).

4. Demi-train de suspension (1) selon l'une des revendications 1 à 3, **caractérisé en ce que** les moyens élastiques de rappel (4, 5) sont intercalés entre le bras de suspension (3) et le support de roue (2).

5. Demi-train de suspension (1) selon la revendication 4, **caractérisé en ce que** les moyens de rappel (4, 5) sont constitués d'un ressort « en C » précontraint (4).

6. Demi-train de suspension (1) selon la revendication 4, **caractérisé en ce que** les moyens de rappel (4, 5) sont constitués d'un ressort embobiné précontraint (4).

7. Demi-train de suspension (1) selon l'une des revendications précédentes, **caractérisé en ce que** la précontrainte des moyens de rappel (4) peut être modifiée.

8. Demi-train de suspension (1) selon l'une quelconque des revendications précédentes, **caractérisé en ce que** le dispositif de compensation constitué par les moyens élastiques de rappel est complémentaire d'un deuxième dispositif de compensation.

## Claims

1. Suspension half-system (1) for a motor vehicle, comprising a wheel support (2) connected to a lower suspension link (3) and to a steering rod (8), and subjected to a first rotational force generated by unevenness of the roadway, elastic return means (4) being fixed to the wheel support (2), the movement, under the first rotational force, of the two points (42 and 43) of attachment of these elastic means (4) generating a second rotational force that is the opposite of the first rotational force, the line passing through the two points (42 and 43) of attachment of the return means (4) being directed, at rest, parallel to the line of the connection between the suspension lower link (3) and the chassis of the vehicle.

2. Suspension half-system (1) according to Claim 1, **characterized in that** the elastic return means (4, 5) are situated in a horizontal plane.

3. Suspension half-system (1) according to Claim 1 or 2, **characterized in that**, when the vehicle is steered in a given direction, the points (42 and 43, 52 and 53) of attachment of the return means (4, 5) move apart and, when the vehicle is steered in the opposite direction, the points (42 and 43, 52 and 53) of attachment of the return means (4, 5) move closer together, the line connecting them moving closer to the axis of rotation of the wheel support (2).

4. Suspension half-system (1) according to one of Claims 1 to 3, **characterized in that** the elastic return means (4, 5) are interposed between the suspension link (3) and the wheel support (2).

5. Suspension half-system (1) according to Claim 4, **characterized in that** the return means (4, 5) are formed of a pre-loaded C-shaped spring (4).

6. Suspension half-system (1) according to Claim 4, **characterized in that** the return means (4, 5) consist of a pre-loaded coiled spring (4).

7. Suspension half-system (1) according to one of the preceding claims, **characterized in that** the preload on the return means (4) may be modified.

8. Suspension half-system (1) according to any one of the preceding claims, **characterized in that** the compensation device formed by the elastic return means complements a second compensation device.

## Patentansprüche

1. Halbe Aufhängungsachse (1) eines Kraftfahrzeugs, die einen Radhalter (2) aufweist, der mit einem unteren Lenkerarm (3) und mit einer Lenkspurstange (8) verbunden ist und von einer ersten Drehkraft beansprucht wird, die von einer Verformung der Straße erzeugt wird, wobei elastische Rückstellmittel (4) am Radhalter (2) befestigt sind, wobei die Verschiebung der zwei Befestigungspunkte (42 und 43) dieser elastischen Mittel (4) bei der ersten Drehkraft eine zweite Drehkraft entgegengesetzt zur ersten Drehkraft erzeugt, wobei die durch die zwei Befestigungspunkte (42 und 43) der Rückstellmittel (4) verlaufende Achse in der Ruhestellung parallel zur Achse der Verbindung zwischen dem unteren Lenkerarm (3) und dem Fahrgestell des Fahrzeugs ausgerichtet ist.

2. Halbe Aufhängungsachse (1) nach Anspruch 1, **dadurch gekennzeichnet, dass** die elastischen Rückstellmittel (4, 5) sich in einer waagrechten Ebene befinden.

3. Halbe Aufhängungsachse (1) nach Anspruch 1 oder 2, **dadurch gekennzeichnet, dass** bei einem Lenkeinschlag in eine bestimmte Richtung die Befestigungspunkte (42 und 43, 52 und 53) der Rückstellmittel (4) sich voneinander entfernen, und bei einem Lenkeinschlag in die entgegengesetzte Richtung die Befestigungspunkte (42 und 43, 52 und 53) der Rückstellmittel (4, 5) sich einander annähern, wobei die sie verbindende Achse sich der Drehachse des Radhalters (2) annähert.

4. Halbe Aufhängungsachse (1) nach einem der Ansprüche 1 bis 3, **dadurch gekennzeichnet, dass** die elastischen Rückstellmittel (4) zwischen den Lenkerarm (3) und den Radhalter (2) eingeschoben sind.

5. Halbe Aufhängungsachse (1) nach Anspruch 4, **dadurch gekennzeichnet, dass** die Rückstellmittel (4) aus einer vorgespannten C-Feder (4) bestehen.

6. Halbe Aufhängungsachse (1) nach Anspruch 4, **dadurch gekennzeichnet, dass** die Rückstellmittel (4, 5) aus einer vorgespannten aufgewickelten Feder (4) bestehen.

7. Halbe Aufhängungsachse (1) nach einem der vorhergehenden Ansprüche, **dadurch gekennzeichnet, dass** die Vorspannung der Rückstellmittel (4) verändert werden kann.

8. Halbe Aufhängungsachse (1) nach einem der vorhergehenden Ansprüche, **dadurch gekennzeichnet, dass** die von den elastischen Rückstellmitteln gebildete Kompensationsvorrichtung komplementär zu einer zweiten Kompensationsvorrichtung ist.
